Europäisches Patentamt

European Patent Office

Office européen des brevets

(11) Publication number: **0 373 609 B1**

# EUROPEAN PATENT SPECIFICATION

(45) Date of publication of patent specification: **12.04.95**

(51) Int. Cl.⁶: **C22C  29/02**, C22C 29/16, C22C 26/00, C04B 35/58

(21) Application number: **89122967.6**

(22) Date of filing: **12.12.89**

(54) **Sintered body for high-accuracy working tools.**

(30) Priority: **14.12.88 JP 316008/88**

(43) Date of publication of application:
**20.06.90 Bulletin  90/25**

(45) Publication of the grant of the patent:
**12.04.95 Bulletin  95/15**

(84) Designated Contracting States:
**DE ES FR GB SE**

(56) References cited:
EP-A- 0 228 693
FR-A- 2 375 155

**PATENT ABSTRACTS OF JAPAN, vol. 6, no. 257 (C-140), 16th December 1982;& JP-A-57 149 448 (MITSUBISHI)**

**PATENT ABSTRACTS OF JAPAN, vol. 7, no. 219 (C-188), 29th September 1983;& JP-A-58 113 349 (MITSUBISHI)**

**PATENT ABSTRACTS OF JAPAN, vol. 13, no. 55 (M-795), 8th february 1989;& JP-A-63 260 701 (SUMITOMO)**

(73) Proprietor: **SUMITOMO ELECTRIC INDUS-TRIES, LTD.**
**5-33, Kitahama 4-chome,**
**Chuo-ku**
**Osaka-shi,**
**Osaka 541 (JP)**

(72) Inventor: **Nakai, Tetsuo c/o Itami Works of Sumitomo**
**Electric Industries Ltd.**
**1-1 Koyakita 1-chome**
**Itami-shi**
**Hyogo-ken (JP)**
Inventor: **Goto, Mitsuhiro c/o Itami Works of Sumitomo**
**Electric Industries Ltd.**
**1-1 Koyakita 1-chome**
**Itami-shi**
**Hyogo-ken (JP)**
Inventor: **Fukaya, Tomohiro c/o Itami Works of Sumitomo**
**Electric Industries Ltd.**
**1-1 Koyakita 1-chome**
**Itami-shi**
**Hyogo-ken (JP)**

PATENT ABSTRACTS OF JAPAN, vol. 12, no. 398 (C-538), 21st October 1988;& JP-A-63 143 237 (SUMITOMO)

74 Representative: **Herrmann-Trentepohl, Werner, Dipl.-Ing. et al**
**Patentanwälte Herrmann-Trentepohl, Kirschner, Grosse, Bockhorni & Partner**
**Forstenrieder Allee 59**
**D-81476 München (DE)**

**Description**

BACKGROUND OF THE INVENTION

Field of the Invention

The present invention relates to an improvement in a sintered body for high-accuracy working tools prepared from cubic boron nitride (hereinafter referred to as CBN).

Description of the Background Art

CBN is the hardest material next to diamond, and a sintered body prepared from the same is applied to various cutting tools. Japanese Patent Laying-Open No. 53-77811(1978) discloses an example of such a CBN sintered body suitable for cutting tools.

The sintered body disclosed in the above prior art contains 80 to 40 percent by volume of CBN and has a remainder mainly formed of a carbide, nitride, boride or silicide of a transition metal belonging to the group IVa, Va or VIa of the periodic table or a mixture or solid solution compound thereof, with addition of Al and/or Si. In this CBN sintered body, the aforementioned compound forms continuous bonding phases in the structure of the sintered body.

In the aforementioned hard sintered body for tools, a bonding compound is prepared from a carbide, nitride, boride or silicide of a transition metal belonging to the group IVa, Va or VIa of the periodic table or a solid solution compound thereof. Since such a compound has excellent thermal conductivity and high hardness, the sintered body generally exhibits high performance when the same is applied to a cutting tool. However, when the sintered body which is disclosed in Japanese Patent Laying-Open No. 53-77811(1978) and now on the market is applied to high-accuracy working of hardened steel, for example, the workpiece is deteriorated in surface roughness and dimensional accuracy during the cutting work depending on cutting conditions, and hence the life of the cutting tool is relatively shortened. It is inferred that the workpiece is thus deteriorated in surface roughness and dimensional accuracy due to insufficient strength of the cutting edge or progress of wear caused by falling of CBN particles.

On the other hand, EP-A-0 228 693 discloses a hard sintered compact for a working tool obtained by sintering a mixture containing about 50 to 75 vol% cBN and a residue of a binder containing about 20 to 50 wt% of Al and one or more Ti compounds selected from the group of $TiN_z$, $Ti(C,N)_z$, $TiC_z$ $(Ti,M)C_z$, $(Ti,M)(C,N)_z$ and $(Ti,M)N_z$, wherein M indicates a transition metal of the group IVa, Va and/or VIa of the periodic table excepting Ti and z is within a range of 0,5 to 0,85 and the total W concentration in the binder is about 4 to 40 wt%.

SUMMARY OF THE INVENTION

Accordingly, the object of the present invention is to provide a sintered body for high-accuracy working tools which is superior in strength to the aforementioned conventional CBN sintered body, improved in wear resistance with suppression of falling of CBN particles and capable of stably performing high-accuracy working. In order to attain the aforementioned first object, the inventors have made deep study to find that a CBN sintered body which is higher in hardness than and superior in wear resistance to the conventional CBN sintered body can be obtained by sintering mixed powder containing 45 to 60 percent by volume of cubic boron nitride powder of not more than 2 $\mu$m in average particle size and having a remainder formed of a binder described below under a superhigh pressure.

The sintered body according to the present invention is obtained by mixing a binder containing one or more Ti compounds selected from a group of $TiN_z$, $Ti(C_{1-x}N_x)_z$, $(Ti,M)(C_{1-x}N_x)_z$ and $(Ti,M)N_z$, where M represents transition metal element(s) belonging to the group IVa, Va and/or VIa of the periodic table excluding Ti, $0.45 \leq z \leq 0.65$ and $0.50 \leq x < 1.0$, such that the atomic ratio of the contained Ti to transition metal element(s) belonging to the group IVa, Va and/or VIa of the periodic table including Ti is 2/3 to 97/100, and further containing 5 to 15 percent by weight of Al, while containing tungsten in the form of at least one of the said Ti compound(s), WC and W so that the entire tungsten concentration in the binder is 2 to 20 percent by weight, with CBN powder of not more than 2 $\mu$m in average particle size and sintering the mixture under CBN-stable superhigh pressure conditions.

A sintered body according to the present invention is preferably obtained by preparing the aforementioned binder with addition of 1 to 10 percent by weight of one or more ferrous metals, mixing the same with CBN powder of not more than 2 $\mu$m in average particle size and sintering the mixture under CBN-stable superhigh pressure conditions. The ferrous metals include Fe, Co and Ni.

In the structure of the inventive sintered body, CBN crystals of not more than 2 $\mu$m in average particle size are joined with each other through bonding phases.

According to a preferred embodiment of the present invention, the sintered body may contain at least one of one or more Ti compounds selected from a group of TiN, Ti(C,N), (Ti,M)(C,N) and (Ti,M)N, titanium boride, aluminum boride, aluminum nitride, a tungsten compound and tungsten in addition to CBN in its product. The average particle size of CBN is preferably not more than 1 $\mu$m. The binder may contain Al in the form of an Al compound. Tungsten is preferably mixed in the form of tungsten boride or tungsten carbide. In the above chemical formulas of the Ti compounds, M preferably represents tungsten.

It can be inferred that the sintered body according to the present invention is excellent in strength and wear resistance with suppressed falling of CBN particles, for the following reasons:

In order to improve strength of the sintered body, it is necessary to increase the content of CBN. If the CBN content is less than 45 percent by volume of the sintered body, the sintered body is unpreferably reduced in strength and hardness. If the CBN content exceeds 60 percent by volume of the sintered body, on the other hand, toughness of the sintered body is reduced to easily cause cutting edge chipping.

In order to prevent falling of CBN particles and improve wear resistance of the sintered body, CBN and the binder or constituents of the binder themselves must be strongly joined with each other. It can be considered that, according to the present invention, the Ti compound(s) and Al contained in the binder react with CBN during sintering under high temperature/high pressure to generate aluminum nitride, aluminum boride and titanium boride thereby to strongly join CBN and the binder or the constituents of the binder themselves with each other.

It is assumed that, in particular, free Ti contained in the Ti compound(s) of $TiN_z$, $Ti(C_{1-x}N_x)_z$,$(Ti,M)$-$(C_{1-x}N_x)_z$ and $(Ti,M)N_z$, where M represents transition metal element(s) belonging to the group IVa, Va and/or VIa of the periodic table excluding Ti, easily reacts with the CBN crystals and forms a boride such as $TiB_2$, to be strongly bonded with CBN.

The value of $z$ in the above chemical formulas is preferably within a range of $0.45 \leq z \leq 0.65$. If the value of $z$ is less than 0.45, the binder itself is unpreferably reduced in strength and hardness although the content of free Ti is increased to improve bond strength. If the value of $z$ exceeds 0.65, on the other hand, the content of free Ti is made insufficient to reduce bond strength, although the binder itself is increased in hardness.

The value of $x$ in the above chemical formulas must be within a range of $0.5 \leq x < 1.0$. TiC is inferior in reactivity with CBN although the same is superior in strength and hardness to TiN. Thus, bond strength is made insufficient if the value of $x$ is less than 0.5.

When nitride(s) and/or carbo-nitride(s) of transition metal(s) belonging to the group IVa, Va and/or VIa of the periodic table are solution-treated or mixed with the aforementioned nitride and carbo-nitride of Ti, the binder is increased in strength and the characteristics thereof are further improved as compared with the case of preparing the binder from only Ti compound(s). The atomic ratio of Ti contained in the binder to the metal(s) belonging to the group IVa, Va and/or VIa of the periodic table including Ti must be 2/3 to 97/100. If the Ti content is less than 2/3, bond strength of the binder and CBN is unpreferably reduced. If the above atomic ratio exceeds 97/100, on the other hand, the binder is reduced in wear resistance and strength.

The binder preferably contains 5 to 15 percent by weight of Al. If the Al content is less than 5 percent by weight, reaction of Al and CBN is insufficient to reduce tenacity of the binder for the CBN crystals. If the Al content exceeds 15 percent by weight of the binder, on the other hand, the binder itself is unpreferably reduced in hardness although bond strength of CBN and the binder is increased.

The inventors have found that wear resistance can be improved by adding 2 to 20 percent by weight of tungsten to the binder in the form of a nitride or carbo-nitride containing Ti, a tungsten compound and/or a pure tungsten. If the tungsten content is less than 2 percent by weight in the binder, wear resistance cannot be improved. If the tungsten content exceeds 20 percent by weight, on the other hand, the content of the Ti compound is reduced to unpreferably reduce junction strength of CBN and the binder. It has been also recognized that the binder is improved in wear resistance and strength to exhibit excellent characteristics particularly when M represents tungsten in the aforementioned chemical formulas.

The binder is increased in strength and hardness to further improve the characteristics of the sintered body through addition of 1 to 10 percent by weight of one or more ferrous metals to the binder. It may be inferred that this is because the ferrous metals have high reactivity with a boride such as $TiB_2$ or $AlB_2$, to be strongly bonded with the boride contained in the sintered body. If the content of the ferrous metal(s) is less than 1 percent by weight, no improvement of the characteristics is observed. When the said content exceeds 10 percent by weight, on the other hand, the binder itself is unpreferably reduced in strength and hardness.

In the sintered body according to the present invention, CBN crystals are joined with each other through bonding phases formed by the aforementioned binder, to provide structure which is filled with fine particles of CBN. Thus, it is possible to increase the CBN content, thereby to improve strength and wear resistance of the sintered body. The CBN must be in the form of fine particles of not more than 2 $\mu$m, preferably not more than 1 $\mu$m in particle size since surface roughness of the workpiece is deteriorated by falling of coarse CBN particles.

According to the present invention, CBN is mixed with the binder containing Ti compound(s), Al and WC, or that further containing one or more ferrous metals, and sintered under a superhigh pressure, thereby to obtain a sintered body containing 45 to 60 percent by volume of CBN and TiN, Ti(C,N), (Ti,M)-(C,N) and/or (Ti,M)N, titanium boride, aluminum boride, aluminum nitride, a tungsten compound and/or tungsten, or that further containing one or more ferrous metals, as hereinabove described. The binder contains 5 to 15 percent by weight of Al, which forms aluminum boride and aluminum nitride in the sintered body. Further, the binder contains 2 to 20 percent by weight of tungsten, which is in the form of a nitride or carbo-nitride containing Ti, a tungsten compound and/or a pure tungsten. Alternatively provided is a sintered body obtained by adding one or more ferrous metals to the said sintered body. The sintered body according to the present invention is excellent in strength and improved in wear resistance with suppressed falling of CBN particles. Therefore, the inventive sintered body is suitably applied to a material for high-accuracy working tools. Further, the inventive sintered body is also applicable to intermittent cutting of hardened steel, or cutting of cast iron or heat-resistant alloy.

These and other objects, features, aspects and advantages of the present invention will become more apparent from the following detailed description of the present invention.

## DESCRIPTION OF THE PREFERRED EMBODIMENTS

### Example 1

Powder of a nitride or carbo-nitride containing Ti was mixed with aluminum powder and WC powder, to prepare binder powder materials of not more than 1 $\mu$m in average particle size through a pot and a ball of cemented carbide, as shown in Table 1. Referring to Table 1, samples Nos. 1 to 7 were prepared according to the present invention, while samples Nos. 8 to 11 were prepared as reference examples. As to the reference examples, underlined values are out of the range of composition according to the present invention. The binder powder of each sample was mixed with CBN powder of not more than 1.5 $\mu$m in average particle size in a volume ratio of 50:50, to prepare mixed powder. A circular plate of cemented carbide composed of WC - 10 wt.% Co was introduced into an Mo vessel, which was then filled with the mixed powder. This vessel was introduced into a superhigh pressure/temperature apparatus, and sintered under a pressure of 51 kb and a temperature of 1320°C for 30 minutes.

Table 2 shows the results of X-ray diffraction of the sintered bodies thus obtained. Peaks of CBN and those of nitrides and carbo-nitrides containing Ti were observed in all of the sintered bodies. In addition to the above substances, recognized were peaks which were regarded as those of $TiB_2$, $AlB_2$, AlN and borides and carbides of W, or W.

These sintered bodies were observed with a scanning type electron microscope, and it was recognized that fine CBN particles were joined with each other through bonding phases. Table 3 shows Vickers hardness values of these sintered bodies.

The aforementioned respective sintered bodies were worked into inserts for cutting work, which were applied to cut round bars of 10 mm in diameter prepared from AISI 52100 ($H_{RC}$: 59 to 61). Cutting conditions were as follows:

Cutting Speed: 100 m/min.

Depth of Cut: 0.1 mm

Feed Rate: 0.05 mm/rev.

Type: Dry

Table 3 also shows values of flank wear width of the cutting edges as well as values of the maximum height of surface roughness of the workpieces measured after performing cutting work for one hour. Referring to Table 1, the column of "Atomic Ratio [Ti:M]" shows the atomic ratios of Ti to transition metals belonging to the group IVa, Va and/or VIa of the periodic table excluding Ti.

Table 1

| | Sample No. | Composition of Binder (wt.%) | Atomic Ratio [Ti:M] |
|---|---|---|---|
| Example | 1 | $78TiN_{0.6}$ <br> $7Al, 15WC$ | 94.8: 5.2 |
| | 2 | $75Ti(C_{0.3}N_{0.7})_{0.55}$ <br> $15Al_3Ti, 10WC$ | 96.4: 3.4 |
| | 3 | $87(Ti_{0.9}W_{0.1})(C_{0.5}N_{0.5})_{0.48}$ <br> $10Al, 3WC$ | 89.0:11.0 |
| | 4 | $70(Ti_{0.8}Ta_{0.2})(C_{0.2}N_{0.8})_{0.65}$ <br> $12Al, 18WC$ | 72.1:27.9 |
| | 5 | $80(Ti_{0.8}Zr_{0.1}Mo_{0.1})N_{0.48}$ <br> $5Al, 15WC$ | 75.4:24.6 |
| | 6 | $78(Ti_{0.9}V_{0.05}Cr_{0.05})N_{0.63}$ <br> $14Al, 18WC$ | 84.3:15.7 |
| | 7 | $72(Ti_{0.8}W_{0.15}Nb_{0.05})(C_{0.1}N_{0.9})_{0.60}$ <br> $18Al_3Ti, 10WC$ | 78.8:21.2 |
| Reference Example | 8 | $70Ti(C_{0.6}N_{0.4})_{0.50}$ <br> $20Al, 10WC$ | 96.2: 3.8 |
| | 9 | $82Ti(C_{0.1}N_{0.9})_{0.70}$ <br> $3Al, 15WC$ | 94.9: 5.1 |
| | 10 | $58TiN_{0.40}$ <br> $7Al, 35WC$ | 85.8:14.2 |
| | 11 | $83(Ti_{0.9}Hf_{0.1})(C_{0.2}N_{0.8})_{0.8}$ <br> $16Al_3Ti, 1WC$ | 90.6:9.4 |

Table 2

| | Sample No. | Result of X-Ray Diffraction |
|---|---|---|
| Example | 1 | TiN, AlN, $AlB_2$, $TiB_2$, WC |
| | 2 | Ti(CN), AlN, $AlB_2$, $TiB_2$, WC |
| | 3 | (TiW)(CN), AlN, $AlB_2$, $TiB_2$, WC |
| | 4 | (TiTa)(CN), AlN, $AlB_2$, $TiB_2$, WC, W, $WB_2$ |
| | 5 | (TiZrMo)(CN), AlN, $AlB_2$, $TiB_2$, WC |
| | 6 | (TiVCr)(CN), AlN, $AlB_2$, $TiB_2$, WC, W, $WB_2$ |
| | 7 | (TiWNb)(CN), AlN, $AlB_2$, $TiB_2$, WC |
| Reference Example | 8 | Ti(CN), AlN, $AlB_2$, $TiB_2$, WC |
| | 9 | Ti(CN), $AlB_2$, $TiB_2$, WC |
| | 10 | TiN, AlN, $AlB_2$, $TiB_2$, WC, W, $WB_2$ |
| | 11 | (TiHf)(CN), AlN, $AlB_2$, $TiB_2$ |

Table 3

| | Sample No. | Vickers Hardness | Flank Wear Width (mm) | Maximum Height of Surface Roughness of Workpiece ($\mu$m) |
|---|---|---|---|---|
| Example | 1 | 3200 | 0.102 | 1.12 |
| | 2 | 3200 | 0.110 | 1.22 |
| | 3 | 3200 | 0.108 | 1.16 |
| | 4 | 3300 | 0.098 | 1.08 |
| | 5 | 3250 | 0.105 | 1.32 |
| | 6 | 3300 | 0.099 | 1.25 |
| | 7 | 3250 | 0.112 | 1.31 |
| Reference Example | 8 | 3200 | 0.193 | 2.12 |
| | 9 | 3100 | 0.211 | 2.48 |
| | 10 | 3000 | 0.175 | 2.05 |
| | 11 | 2900 | 0.182 | 2.41 |

Example 2

Powder materials of 75 percent by weight of $Ti(C_{0.1}N_{0.9})_{0.60}$, 7 percent by weight of Al and 18 percent by weight of WC were mixed with each other to obtain binder powder of not more than 1 $\mu$m in average particle size. The binder contains Ti and W in an atomic ratio of 93.6:6.4. The binder powder was mixed with CBN powder to prepare mixed powder materials as shown in Table 4. Referring to Table 4, samples Nos. 12 to 15 were prepared according to the present invention, while samples Nos. 16 to 18 were prepared as reference examples. The sample No. 18 was prepared from CBN powder of 3 to 5 $\mu$m in particle size. As to the reference examples shown in Table 4, underlined values are out of the range of CBN particle size and content according to the present invention.

The samples thus obtained were sintered under a superhigh pressure similarly to Example 1, to obtain sintered bodies. These sintered bodies were worked into inserts for cutting work.

The inserts thus obtained were applied to cut round bars of 100 mm in diameter and 300 mm in length prepared from SKD11 ($H_{RC}$: 60 to 62), each having five grooves provided perpendicularly to the axial direction at regular intervals on the outer peripheral surface. Cutting conditions were as follows:

Cutting Speed: 80 m/min.

Depth of Cut: 0.07 mm

Feed Rate: 0.05 mm/rev.

Type: Dry

Table 4 shows numbers of times of passage attained before cutting edge chipping with respect to the outer peripheral surfaces divided by the grooves as well as values of the maximum height of surface roughness of the workpieces as to the passage attained immediately before cutting edge chipping.

## Table 4

| | Sample No. | cBN Particle Size | cBN Content (vol.%) | Number of Times of Passage attained before Cutting Edge Chipping | Maximum Height of Surface Roughness of Workpiece |
|---|---|---|---|---|---|
| Example | 12 | not more than 2μm | 60 | 25 | 1.51 |
| | 13 | 1~2μm | 55 | 32 | 1.42 |
| | 14 | not more than 1μm | 50 | 30 | 1.21 |
| | 15 | not more than 1μm | 45 | 24 | 1.26 |
| Reference Example | 16 | not more than 2μm | <u>65</u> | 7 | 1.99 |
| | 17 | not more than 2μm | <u>40</u> | 3 | 2.61 |
| | 18 | 3~5μm | 55 | 9 | 3.12 |

Example 3

Binder powder materials of not more than 1 μm in particle size were prepared as shown in Table 5. Referring to Table 5, the column of "Atomic Ratio [Ti:M]" shows the atomic ratios of Ti to metals belonging to the group IVa, Va and/or VIa of the periodic table excluding Ti. These binder powder materials were mixed with CBN powder materials of not more than 1μm in particle size in a volume ratio of 50:50, to obtain mixed powder materials.

The mixed powder materials thus obtained were sintered under a superhigh pressure similarly to Example 1, to obtain sintered bodies. These sintered bodies were worked into inserts for cutting work.

The inserts thus prepared were applied to cut end surfaces of round bars of 100 mm in diameter prepared from SNCM411 ($H_{RC}$: 58 to 61). Cutting conditions were as follows:

Cutting Speed: 150 m/min.

Depth of Cut: 0.2 mm

Feed Rate: 0.07 mm/rev.

Type: Dry

Table 6 shows the numbers of cutting-available times and values of the maximum height of surface roughness of the workpieces observed at the final cutting-available times.

Referring to Tables 5 and 6, samples Nos. 19 to 23 were prepared according to the present invention, while samples Nos. 24 and 25 were prepared as reference examples. As to the reference examples shown in Table 5, underlined values are out of the range of the binder composition according to the present

invention.

Table 5

| | Sample No. | Composition of Binder (wt.%) | Atomic Ratio [Ti:M] |
|---|---|---|---|
| Example | 19 | $72(Ti_{0.9}W_{0.1})(C_{0.2}N_{0.8})_{0.55}$ 8Al, 15WC, 5Ni | 83.8:16.2 |
| | 20 | $73(Ti_{0.9}Hf_{0.1})(C_{0.1}N_{0.9})_{0.60}$ 12Al, 5WC, 10Ni | 87.9:12.1 |
| | 21 | $71(Ti_{0.9}Cr_{0.1})(C_{0.1}N_{0.9})_{0.50}$ 14Al, 12WC, 3Co | 85.9:14.1 |
| | 22 | $74(Ti_{0.9}W_{0.1})N_{0.60}$ 10Al, 8WC, 8Co | 86.7:13.3 |
| | 23 | $72Ti(C_{0.1}N_{0.9})_{0.55}$ 8Al, 18WC, 2Fe | 93.4: 6.6 |
| Reference Example | 24 | $70(Ti_{0.9}W_{0.1})(C_{0.2}N_{0.8})_{0.50}$ 8Al, 7WC, 15Ni | 85.5:14.5 |
| | 25 | $79.5(Ti_{0.8}W_{0.1}Zr_{0.1})(C_{0.1}N_{0.9})_{0.50}$ 12Al, 8WC, 0.5Co | 77.1:22.9 |

Table 6

| | Sample No. | Number of Cutting Available Times | Maximum Height of Surface Roughness of Workpiece (μm) |
|---|---|---|---|
| Example | 19 | 31 | 1.38 |
| | 20 | 28 | 1.21 |
| | 21 | 35 | 1.30 |
| | 22 | 29 | 1.12 |
| | 23 | 32 | 1.41 |
| Reference Example | 24 | 4 | 2.51 |
| | 25 | 20 | 1.48 |

Although the present invention has been described and illustrated in detail, it is clearly understood that the same is by way of illustration and example only and is not to be taken by way of limitation, the scope of the present invention being limited only by the terms of the appended claims.

**Claims**

1. A sintered body for high-accuracy working tools obtained by sintering mixed powder containing at least 45 percent by volume and not more than 60 percent by volume of cubic boron nitride powder of not more than 2 $\mu$m in average particle size and having a remainder formed of binder powder under a superhigh pressure,

said binder containing at least 5 percent by weight and not more than 15 percent by weight of Al and at least 2 percent by weight and not more than 20 percent by weight of W and having a remainder formed of one or more Ti compounds selected from a group of $TiN_z$, $Ti(C_{1-x}N_x)_z$,$(Ti,M)(C_{1-x}N_x)_z$ and $(Ti,M)N_z$, where M represents transition metal element(s) belonging to the group IVa, Va and/or VIa of the periodic table excluding Ti, $0.45 \leq z \leq 0.65$ and $0.50 \leq x < 1.0$, containing said W in the form of at least one of said Ti compound(s), WC and W, the atomic ratio of contained Ti to transition metal element(s) belonging to the group IVa, Va and/or VIa of the periodic table including Ti being at least 2/3 and not more than 97/100,

cubic boron nitride crystals of not more than 2 $\mu$m in average particle size being bonded with each other through bonding phases formed by said binder in the structure of said sintered body.

2. A sintered body for high-accuracy working tools in accordance with claim 1, containing at least one of one or more Ti compounds selected from a group of TiN, Ti(C,N), (Ti,M)(C,N) and (Ti,M)N, titanium boride, aluminum boride, aluminum nitride, a tungsten compound and tungsten in its product in addition to said cubic boron nitride.

3. A sintered body for high-accuracy working tools in accordance with claim 1, wherein said cubic boron nitride is not more than 1 $\mu$m in average particle size.

4. A sintered body for high-accuracy working tools in accordance with claim 1, wherein said Al is contained in said binder in the form of an Al compound.

5. A sintered body for high-accuracy working tools in accordance with claim 1, wherein said tungsten is mixed in the form of either tungsten boride or tungsten carbide.

6. A sintered body for high-accuracy working tools in accordance with claim 1, wherein said M represents tungsten.

7. A sintered body for high-accuracy working tools obtained by sintering mixed powder containing at least 45 percent by volume and not more than 60 percent by volume of cubic boron nitride powder of not more than 2 $\mu$m in average particle size and having a remainder formed of binder powder under a superhigh pressure,

said binder containing at least 5 percent by weight and not more than 15 percent by weight of Al, at least 2 percent by weight and not more than 20 percent by weight of W and at least 1 percent by weight and not more than 10 percent by weight of one or more ferrous metals and having a remainder formed of one or more Ti compounds selected from a group of $TiN_z$, $Ti(C_{1-x}N_x)_z$, $(Ti,M)(C_{1-x}N_x)_z$ and $(Ti,M)N_z$, where M represents transition metal element(s) belonging to the group IVa, Va and/or VIa of the periodic table excluding Ti, $0.45 \leq z \leq 0.65$ and $0.50 \leq x < 1.0$, containing said W in the form of at least one of said Ti compound(s), WC and W, the atomic ratio of contained said Ti to transition metal element(s) belonging to the group IVa, Va and/or VIa of the periodic table including Ti being at least 2/3 and not more than 97/100,

cubic boron nitride crystals of not more than 2 $\mu$m in average particle size being bonded with each other through bonding phases formed by said binder in the structure of said sintered body.

8. A sintered body for high-accuracy working tools in accordance with claim 7, containing at least one of one or more Ti compounds selected from a group of TiN, Ti(C,N), (Ti,M)(C,N) and (Ti,M)N, titanium boride, aluminum boride, aluminum nitride, a tungsten compound and tungsten in its product in addition to said cubic boron nitride.

9. A sintered body for high-accuracy working tools in accordance with claim 7, wherein said cubic boron nitride is not more than 1 $\mu$m in average particle size.

10. A sintered body for high-accuracy working tools in accordance with claim 7, wherein said Al is contained in said binder in the form of an Al compound.

11. A sintered body for high-accuracy working tools in accordance with claim 7, wherein said tungsten is mixed in the form of either tungsten boride or tungsten carbide.

12. A sintered body for high-accuracy working tools in accordance with claim 7, wherein said M represents tungsten.

**Patentansprüche**

1. Sinterkörper für Präzisionswerkzeuge, erhalten durch Sintern eines gemischten Pulvers, enthaltend mindestens 45 Vol.-% und nicht mehr als 60 Vol.-% kubisches Bornitrid-Pulver mit einer mittleren Teilchengröße von nicht mehr als 2 $\mu$m und mit einem restlichen Anteil aus Binder-Pulver bei superhohem Druck,
   wobei der Binder mindestens 5 Gew.-% und nicht mehr als 15 Gew.-% Al und mindestens 2 Gew.-% und nicht mehr als 20 Gew.-% W enthält und einen restlichen Anteil aus einer oder mehreren Ti-Verbindungen, ausgewählt aus $TiN_z$, $Ti(C_{1-x}N_x)_z$, $(Ti,M)(C_{1-x}N_x)_z$ und $(Ti,M)N_z$, wobei M (ein) Übergangsmetall-Element(e) der Gruppen IVa, Va und/oder VIa des Periodensystems mit Ausnahme von Ti bezeichnet, $0,45 \leq z \leq 0,65$ und $0,50 \leq x \leq 1,0$ ist, enthaltend das W in Form von mindestens einer der Ti-Verbindungen, WC und W, wobei das Atomverhältnis des enthaltenen Ti zu dem/den Übergangsmetall-Element(en) der Gruppen IVa, Va und/oder VIa des Periodensystems, einschließlich Ti, mindestens 2/3 und nicht mehr als 97/100 beträgt,
   wobei kubische Bornitrid-Kristalle mit einer mittleren Teilchengröße von nicht mehr als 2 $\mu$m miteinander verbunden sind über bindende Phasen aus dem Binder in der Struktur des Sinterkörpers.

2. Sinterkörper für Präzisionswerkzeuge nach Anspruch 1, enthaltend mindestens eine von einer oder mehreren Ti-Verbindungen, ausgewählt aus der Gruppe aus TiN, Ti(C,N), (Ti,M)(C,N) und (Ti,M)N, Titanborid, Aluminiumborid, Aluminiumnitrid, einer Wolfram-Verbindung und Wolfram in dem Produkt, neben dem kubischen Bornitrid.

3. Sinterkörper für Präzisionswerkzeuge nach Anspruch 1, wobei das kubische Bornitrid eine mittlere Teilchengröße von nicht mehr als 1 $\mu$m besitzt.

4. Sinterkörper für Präzisionswerkzeuge nach Anspruch 1, wobei das Al in dem Binder in Form einer Al-Verbindung enthalten ist.

5. Sinterkörper für Präzisionswerkzeuge nach Anspruch 1, wobei das Wolfram in Form von entweder Wolframborid oder Wolframcarbid vermischt ist.

6. Sinterkörper für Präzisionswerkzeuge nach Anspruch 1, wobei M Wolfram bedeutet.

7. Sinterkörper für Präzisionswerkzeuge, erhalten durch Sintern eines gemischten Pulvers, enthaltend mindestens 45 Vol.-% und nicht mehr als 60 Vol.-% kubisches Bornitrid-Pulver mit einer mittleren Teilchengröße von nicht mehr als 2 $\mu$m und mit einem restlichen Anteil aus Binder-Pulver bei superhohem Druck,
   wobei der Binder mindestens 5 Gew.-% und nicht mehr als 15 Gew.-% Al und mindestens 2 Gew.-% und nicht mehr als 20 Gew.-% W und mindestens 1 Gew.-% und nicht mehr als 10 Gew.-% an einem oder mehreren Eisen-Metallen enthält, mit einem restlichen Anteil aus einer oder mehreren Ti-Verbindungen, ausgewählt aus einer Gruppe aus $TiN_z$, $Ti(C_{1-x}N_x)_z$, $(Ti,M)(C_{1-x}N_x)_z$ und $(Ti,M)N_z$, wobei M (ein) Übergangsmetall-Element(e) der Gruppen IVa, Va und/oder VIa des Periodensystems mit Ausnahme von Ti bezeichnet, $0,45 \leq z \leq 0,65$ und $0,50 \leq x \leq 1,0$ ist, enthaltend das W in Form von mindestens einer der Ti-Verbindungen, WC und W, wobei das Atomverhältnis des enthaltenen Ti zu dem/den Übergangsmetall-Element(en) der Gruppen IVa, Va und/oder VIa des Periodensystems, einschließlich Ti, mindestens 2/3 und nicht mehr als 97/100 beträgt,

wobei kubische Bornitrid-Kristalle mit einer mittleren Teilchengröße von nicht mehr als 2 $\mu$m miteinander verbunden sind über bindende Phasen aus dem Binder in der Struktur des Sinterkörpers.

**8.** Sinterkörper für Präzisionswerkzeuge nach Anspruch 7, enthaltend mindestens eine von einer oder mehreren Ti-Verbindungen, ausgewählt aus der Gruppe aus TiN, Ti(C,N), (Ti,M)(C,N) und (Ti,M)N, Titanborid, Aluminiumborid, Aluminiumnitrid, eine Wolfram-Verbindung und Wolfram in dem Produkt, neben dem kubischen Bornitrid.

**9.** Sinterkörper für Präzisionswerkzeuge nach Anspruch 7, wobei das kubische Bornitrid eine mittlere Teilchengröße von nicht mehr als 1 $\mu$m besitzt.

**10.** Sinterkörper für Präzisionswerkzeuge nach Anspruch 7, wobei das Al in dem Binder in Form einer Al-Verbindung enthalten ist.

**11.** Sinterkörper für Präzisionswerkzeuge nach Anspruch 7, wobei das Wolfram in Form von entweder Wolframborid oder Wolframcarbid vermischt ist.

**12.** Sinterkörper für Präzisionswerkzeuge nach Anspruch 7, wobei M Wolfram bedeutet.

**Revendications**

**1.** Corps fritté pour outils de haute précision obtenu par le frittage d'une poudre mixte contenant au moins 45 pour cent en volume et pas plus de 60 pour sent en volume de poudre de nitrure de bore cubique de pas plus de 2 $\mu$m en taille moyenne de particule et ayant un résidu formé de poudre liante sous une haute pression,

ledit liant contenant au moins 5 pour cent en poids et pas plus de 15 pour cent en poids d'Al et au moins 2 pour cent en poids et pas plus de 20 pour cent en poids de W et ayant un résidu formé d'un ou de plusieurs composés de Ti sélectionnés à partir d'un groupe de TiN$_z$, de Ti(C$_{1-x}$N$_x$)$_z$, de (Ti,M)-(C$_{1-x}$N$_x$)$_z$ et de (Ti,M)N$_z$, où M représente un (des) élément(s) de métal de transition appartenant au groupe IVa, Va et/ou VIa du tableau périodique excluant le Ti, $0,45 \leq z \leq 0,65$ et $0,50 \leq x < 1,0$, contenant ledit W sous la forme d'au moins l'un dudit (desdits) composé(s) de Ti, WC et W, le rapport atomique du contenu en Ti à l'élément (aux éléments) de métal de transition appartenant au groupe IVa, Va et/ou VIa du tableau périodique incluant le Ti étant au moins de 2/3 et pas plus de 97/100,

les cristaux de nitrure de bore cubique de pas plus de 2 $\mu$m en taille moyenne de particule étant liés les uns aux autres à travers des phases liantes formées par ledit liant dans la structure dudit corps fritté.

**2.** Corps fritté pour outils de haute précision selon la revendication 1, contenant au moins un d'un ou de plusieurs composés de Ti sélectionné à partir d'un groupe de TiN, de Ti(C,N), de (Ti,M)(C,N) et de (Ti,M)N, de borure de titane, de borure d'aluminium, de nitrure d'aluminium, d'un composé de tungstène et de tungstène dans ses produits en plus dudit nitrure de bore cubique.

**3.** Corps fritté pour outils de haute précision selon la revendication 1, dans lequel ledit nitrure de bore a une taille moyenne de particule de pas plus de 1 $\mu$m.

**4.** Corps fritté pour outils de haute précision selon la revendication 1, dans lequel ledit Al est contenu dans ledit liant sous la forme d'un composé d'Al.

**5.** Corps fritté pour outils de haute précision selon la revendication 1, dans lequel ledit tungstène est mélangé sous la forme soit de borure de tungstène soit de carbure de tungstène.

**6.** Corps fritté pour outils de haute précision selon la revendication 1, dans lequel ledit M représente le tungstène.

**7.** Corps fritté pour outils de haute précision obtenu par le frittage d'une poudre mixte contenant au moins 45 pour cent en volume et pas plus de 60 pour cent eu volume de poudre de nitrure de bore cubique de pas plus de 2 $\mu$m en taille moyenne de particule et ayant un résidu formé de poudre liante sous une haute pression,

ledit liant contenant au moins 5 pour cent en poids et pas plus de 15 pour cent en poids d'Al, au moins 2 pour cent en poids et pas plus de 20 pour cent eu poids de W et au moins 1 pour cent en poids et pas plus de 10 pour cent en poids d'un ou de plusieurs métaux ferreux et ayant un résidu formé d'un ou de plusieurs composés de Ti sélectionnés à partir d'un groupe de $TiN_z$, de $Ti(C_{1-x}N_x)_z$, de $(Ti,M)(C_{1-x}N_x)_z$ et de $(Ti,M)N_z$, où M représente un (des) élément(s) de métal de transition appartenant au groupe IVa, Va et/ou VIa du tableau périodique excluant le Ti, $0,45 \leq z \leq 0,65$ et $0,50 \leq x < 1,0$, contenant ledit W sous la forme d'au moins l'un dudit (desdits) composé(s) de Ti, WC et W, le rapport atomique du contenu dudit Ti à l'élément (aux éléments) de métal de transition appartenant au groupe IVa, Va et/ou VIa du tableau périodique incluant le Ti étant au moins de 2/3 et pas plus de 97/100,

les cristaux de nitrure de bore cubique de pas plus de 2 $\mu$m en taille moyenne de particule étant liés les uns aux autres à travers des phases liantes formées par ledit liant dans la structure dudit corps fritté.

8. Corps fritté pour outils de haute précision selon la revendication 7, contenant au moins un d'un ou de plusieurs composés de Ti sélectionnés à partir d'un groupe de TiN, de Ti(C,N), de (Ti,M)(C,N) et de (Ti,M)N, de borure de titane, de borure d'aluminium, de nitrure d'aluminium, d'un composé de tungstène et de tungstène dans ses produits en plus dudit nitrure de bore cubique.

9. Corps fritté pour outils de haute précision selon la revendication 7, dans lequel ledit nitrure de bore cubique a pas plus de 1 $\mu$m en taille moyenne de particule.

10. Corps fritté pour outils de haute précision selon la revendication 7, dans lequel ledit Al est contenu dans ledit liant sous la forme d'un composé d'Al.

11. Corps fritté pour outils de haute précision selon la revendication 7, dans lequel ledit tungstène est mélangé sous la forme soit de borure de tungstène soit de carbure de tungstène.

12. Corps fritté pour outils de haute précision selon la revendication 7, dans lequel ledit M représente le tungstène.